# EUROPÄISCHE PATENTANMELDUNG

(11) **EP 3 254 753 A1**
(43) Veröffentlichungstag der Anmeldung: **13.12.2017**
(21) Anmeldenummer: 16173503.0
(22) Anmeldetag: 08.06.2016
(51) Int. Cl.: B01J 19/30

(54) **FÜLLKÖRPER**

(71) Anmelder: Vereinigte Füllkörper-Fabriken GmbH & Co. KG, 56235 Ransbach-Baumbach (DE)
(72) Erfinder: Schwämmlein, Kurt, 55545 Bad Kreuznach (DE)
(74) Vertreter: Quermann, Helmut

(57) **Zusammenfassung**

Die Erfindung betrifft einen Füllkörper (1), insbesondere für Stoff- und/oder Wärmeaustauschkolonnen, die von einer Gas- und/oder Flüssigkeitsströmung durchsetzt werden. Der Füllkörper (1) weist eine Außenstruktur (14) und eine Innenstruktur (15) auf, wobei der Füllkörper (1) eine Grundfläche (2), eine der Grundfläche (2) gegenüberliegende Deckfläche (4) und eine zwischen der Grundfläche (2) und der Deckfläche (4) angeordnete Mantelfläche (3) aufweist. In der Innenstruktur sind mehrere Leitprofile (7) ausgebildet, wobei sich die Leitprofile (7) von der Grundfläche (2) in Richtung der Deckfläche (4) erstrecken. Dabei ist zumindest ein Teilbereich des Leitprofils (7) zu der Grundfläche (2) geneigt ausgebildet.

## Beschreibung

Die Erfindung betrifft einen Füllkörper, insbesondere für Stoff- und/oder Wärmeaustauschkolonnen, die von einer Gas- und/oder Flüssigkeitsströmung durchsetzt werden.

Es ist bekannt, Füllkörper verschiedener Ausführungsformen als regellose Schüttungen in Kolonnen, Reaktoren und ähnlichen Apparaten einzusetzen. Technische Anwendungen sind beispielsweise gegeben bei thermischen, chemischen oder physikalischen Verfahren wie Absorption, Desorption (Strippung), Destillation, Rektifikation, Extraktion, direkter Gaskühlung, regenerativer Verbrennung, katalytischer Stoffumwandlung und anderen verfahrenstechnischen Trennprozessen, bei denen verschiedene Phasen bzw. Medien effektiv in Kontakt gebracht werden sollen.

Die Füllkörper vergrößern die Oberfläche in dem von ihnen ausgefüllten Volumen und intensivieren dadurch den Stoff- bzw. Wärmeaustausch zwischen den verschiedenen Phasen bzw. Medien innerhalb dieses Volumens. Die Phasengrenzfläche für den Stoffübergang stimmt in der Regel nicht exakt mit der geometrischen Füllkörperoberfläche überein, sondern ist vielmehr die Summe aus der während des Prozesses benetzten Füllkörperoberfläche und der Oberflächensumme aller sich im Füllkörperbett bildenden Tropfen.

Ferner dienen Füllkörper bzw. Füllkörperschüttungen der Abscheidung kleiner und kleinster Flüssigkeitströpfchen bis hin zur Abscheidung von Aerosolen. Auch finden Füllkörper als Aufwuchsfläche für einen Biofilm in biologischen Anlagen und als Tropfkörper in Wäschern Anwendung.

Das durch die Füllkörper gebildete Füllkörperbett weist gegenüber der Strömung der Phasen einen bestimmten Druckverlust auf. Dieser hängt vom Gasbelastungsfaktor, der Berieselungsdichte, dem Füllkörpertyp, der Füllkörpergröße, der geometrischen Gestaltung des Füllkörpers und weiteren Parametern ab.

Die Füllkörper müssen für alle Anwendungen eine geeignete mechanische Stabilität und eine geeignete Oberfläche aufweisen, sowie eine gute Durchmischung der verschiedenen Phasen oder Medien erzeugen, ohne der Strömung der Phasen oder Medien jedoch einen zu großen Druckverlust entgegenzusetzen. Das für den jeweiligen Trennprozess oder chemischen bzw. thermischen Prozess notwendige Schüttvolumen soll so gering wie möglich sein.

In der Regel muss ein geeigneter Kompromiss zwischen den entgegengesetzt verlaufenden Anforderungen, wie zum Beispiel geringer Druckverlust bei möglichst großer Füllkörperoberfläche, gefunden werden.

Dazu weisen Füllkörper häufig eine Innenstruktur und eine Außenstruktur auf, wobei eine Vielzahl unterschiedlicher Außenstrukturen und Innenstrukturen bekannt sind. Beispielsweise sind aus den Druckschriften DE 2 313 287 A und DE 27 39 236 A1 gitterförmige Füllkörper bekannt, wobei diese Füllkörper eine kugelförmige Außenkontur aufweisen. Ferner ist aus der Druckschrift EP 1 923 133 A1 ein gitterförmiger Füllkörper bekannt, wobei der Füllkörper eine einem Ellipsoid ähnliche Außenkontur mit mindestens einem umlaufenden Außenstab senkrecht zu anderen Außenstäben aufweist.

Weiterhin ist aus der Druckschrift EP 1 586 375 A1 ein Füllkörper für den Stoff- und/oder Wärmeaustausch mit einer Außenstruktur und einer Innenstruktur bekannt, wobei die Außenstruktur durch eine relativ dicke Außenwandung gebildet ist und diese Außenwandung die Innenstruktur umlaufend umschließt, wobei die Innenstruktur gitterförmig ausgebildet ist. Dabei sind die Wände der Innenstruktur dünnwandig gegenüber der Außenwandung des Füllkörpers ausgebildet.

Aufgabe der vorliegenden Erfindung ist es, einen Füllkörper zu schaffen, der eine besonders gute Durchmischung der den Füllkörper bzw. eines durch diese Füllkörper gebildeten Füllkörperbetts durchströmenden Fluide gewährleistet und so einen besonders guten Stoff- bzw. Wärmeaustausch bei möglichst geringen Druckverlusten sicherstellt.

Gelöst wird die Aufgabe durch einen Füllkörper, der gemäß den Merkmalen des Patentanspruchs 1 ausgebildet ist.

Bei dem Füllkörper ist vorgesehen, dass dieser eine Außenstruktur und eine Innenstruktur aufweist, wobei der Füllkörper eine Grundfläche, eine der Grundfläche gegenüberliegende Deckfläche und eine zwischen der Grundfläche und der Deckfläche angeordnete Mantelfläche aufweist.

Die Innenstruktur weist mehrere Leitprofile auf, wobei sich die Leitprofile von der Grundfläche in Richtung der Deckfläche erstrecken. Dabei ist zumindest ein Teilbereich des Leitprofils zu der Grundfläche geneigt ausgebildet, wobei geneigt in diesem Zusammenhang bedeutet, dass das Leitprofil nicht senkrecht zu der Grundfläche ausgebildet ist.

Die zu der Grundfläche geneigten Leitprofile bewirken ein Umlenken des den Füllkörper durchströmenden Fluids, sodass eine besonders gute Durchmischung der Medien und somit ein besonders guter Stoff- bzw. Wärmeaustausch zwischen den Medien sichergestellt ist.

Die Leitprofile können durchaus plattenförmig gestaltet sein, wobei es als vorteilhaft angesehen wird, wenn die Leitprofile gewölbt ausgebildet sind.

Vorzugsweise sind die Leitprofile kreuzförmig oder sternförmig angeordnet.

In einer vorteilhaften Weiterbildung der Erfindung ist eine Gesamtheit von Leitprofilen gebildet, wobei die Gesamtheit von Leitprofilen von der Grundfläche in Richtung der Deckfläche rechtsgängig oder linksgängig ausgebildet ist. Bei einer derartigen Ausführungsform der Erfindung sind die Leitprofile folglich ähnlich den Flügeln eines Propellers angeordnet. Diese Anordnung der Leitprofile bewirkt eine besonders gute Durchmischung der Medien bei Durchströmung des Füllkörpers von der Grundfläche in Richtung der Deckfläche oder umgekehrt, was sich wiederum vorteilhaft auf den Stoff- und/oder Wärmeaustausch auswirkt. Die Umlenkung des den Füllkörper durchströmenden Fluids an den linksgängig oder rechtsgängig angeordneten Leitprofilen begünstigt zudem die Bildung einer Drallströmung des Fluids, wodurch ein besonders effektiver Stoff- und/oder Wärmeaustausch zwischen den Medien erreicht wird.

Um die Durchmischung zu verbessern, ist in einer vorteilhaften Weiterbildung der Erfindung vorgesehen, dass ein Querschnitt parallel zu der Grundfläche und/oder der Deckfläche des Füllkörpers gebildet ist, der einen Krümmungswechsel des Leitprofils aufweist.

Es ist durchaus denkbar, dass zumindest eines der Leitprofile füllkörperinnenseitig eine Aussparung aufweist.

In einer bevorzugten Ausführungsform der Erfindung sind die Leitprofile identisch ausgebildet.

Gemäß einer weiteren bevorzugten Ausführungsform der Erfindung ist vorgesehen, dass eine Gesamtheit von Grundfläche, Deckfläche und Mantelfläche eine Außenkontur des Füllkörpers bildet, wobei die Außenkontur die Form eines Zylinders oder die Form eines Kegelstumpfs oder die Form eines axialsymmetrischen Teilbereichs eines Ellipsoids, insbesondere die Form eines axialsymmetrischen Teilbereichs einer Kugel, oder die Form eines axialsymmetrischen Teilbereichs eines Hyperboloids aufweist. Diese Formen der Außenkontur wirken sich vorteilhaft auf das Befüllen und Entleeren einer Kolonne aus, da die Füllkörper mit einer Außenkontur der vorgenannten Art leicht aneinander und/oder an der Kolonneninnenwand abrollen bzw. abgleiten können.

In diesem Zusammenhang wird es als besonders vorteilhaft angesehen, wenn die Außenkontur glatt ausgebildet ist, wobei glatt in diesem Zusammenhang bedeutet, dass der Füllkörper an seiner Außenkontur keine nach außen gerichteten Vorsprünge aufweist.

Es ist aber durchaus denkbar, dass der Füllkörper in seiner Innenstruktur Vorsprünge aufweist, wobei diese Vorsprünge insbesondere zur Tropfenbildung von den Füllkörper benetzender Flüssigkeit dient.

Es wird hinsichtlich eines besonders geringen Druckverlusts als vorteilhaft angesehen, wenn die Außenstruktur im Wesentlichen offen gestaltet ist, insbesondere die Grundfläche und/oder die Mantelfläche und/oder die Deckfläche eine netzartige Struktur aufweisen.

In einer bevorzugten Ausführungsform der Erfindung ist die Grundfläche und/oder die Deckfläche kreisförmig ausgebildet, vorzugsweise sind die Grundfläche und die Deckfläche zueinander parallel ausgebildet.

Es ist aber auch durchaus denkbar, dass die Grundfläche und/oder die Deckfläche radiärsymmetrisch oder als Vieleck, insbesondere als radiärsymmetrisches Vieleck ausgebildet ist.

Die Grundfläche und/oder Deckfläche muss nicht notwendigerweise eben gestaltet sein. Zumindest eine dieser Flächen kann auch gekrümmt, gewellt, bspw. zickzack-förmig gewellt, und somit nicht eben ausgebildet sein.

In einer bevorzugten Ausführungsform der Erfindung ist der Füllkörper und/oder die Außenstruktur und/oder die Innenstruktur und/oder die Gesamtheit der Leitprofile radiär-symmetrisch zu einer Symmetrieachse ausgebildet.

Vorzugsweise weist die Innenstruktur eine an die Deckfläche und/oder die Grundfläche angrenzende Ausnehmung auf. Vorzugsweise ist diese Ausnehmung rotationssymmetrisch, insbesondere rotationssymmetrisch zu der Symmetrieachse der Radiärsymmetrie.

Eine besonders stabile Ausführungsform des Füllkörpers wird erreicht, wenn die Außenstruktur zumindest einen Außenstab aufweist, wobei der Außenstab die Innenstruktur umlaufend umschließt.

Der umlaufende Außenstab verleiht dem Füllkörper eine hohe mechanische Festigkeit. Dadurch ist eine nachteilige Verformung oder gar eine Zerstörung des Füllkörpers selbst bei einer hohen regellosen Schüttung und dadurch hohen Gewichtsbelastung sowie beim Einfüllen des Füllkörpers in eine Kolonne verhindert.

Hinsichtlich des zumindest einen umlaufenden Außenstabs wird es als besonders vorteilhaft angesehen, wenn der Außenstab die Grundfläche umlaufend umschließt. Dadurch wird ein Verhaken des Füllkörpers mit anderen Füllkörpern einer Schüttung im Bereich der Grundfläche besonders effektiv verhindert, wodurch ein Befüllen und Entleeren einer Kolonne vereinfacht ist, und dennoch eine sehr offene Struktur und somit große Eintrittsfläche für das Fluid im Bereich der Grundfläche erreicht.

Es ist aber auch durchaus denkbar, dass der umlaufende Außenstab die Deckfläche umlaufend umschließt.

Vorzugsweise weist der Füllkörper zumindest zwei Außenstäbe auf, wobei ein erster Außenstab die Grundfläche umlaufend umschließt und ein zweiter Außenstab die Deckfläche umlaufend umschließt.

Der umlaufende Außenstab kann durchaus derart gestaltet sein, dass zumindest ein Teilbereich des Außenstabes gegenüber einem an den umlaufenden Außenstab angrenzenden Bereich der Mantelfläche hervorsteht.

Um die mechanische Stabilität des Füllkörpers weiter zu erhöhen, ist in einer vorteilhaften Weiterbildung der Erfindung vorgesehen, dass die Außenstruktur mehrere Stützstäbe aufweist, insbesondere die Stützstäbe entlang der Außenkontur der Mantelfläche verlaufen. Durch die Stützstäbe wird somit insbesondere ein Verdrillen des Füllkörpers verhindert.

Um die Außenstruktur möglichst offen zu gestalten, das heißt, damit von vornherein sowohl von der strömenden Gasphase als auch von der strömenden Flüssigphase ein möglichst großer Anteil auch in das Füllkörperinnere gelangt, werden zweckmäßig alle Stützstäbe und/oder den Außenstab und/oder die Außenstäbe möglichst schlank ausgeführt. Dadurch wird zudem ein besonders geringes Gewicht des Füllkörpers erreicht, sodass mit derartigen Füllkörpern auch große Kolonnenhöhen erzielt werden können, ohne dass am Kolonnenboden aufliegende Füllkörper aufgrund der Gewichtskraft der übrigen Füllkörper verformt bzw. beschädigt werden.

Es wird als besonders vorteilhaft angesehen, wenn zumindest einer der Stützstäbe zwei Leitprofile und/oder den Außenstab mit einem der Leitprofile und/oder zwei Außenstäbe verbindet.

Hinsichtlich der Anordnung der Stützstäbe wird es als besonders vorteilhaft angesehen, wenn die Stützstäbe bei einer rechtsgängigen Anordnung der Leitprofile linksgängig angeordnet sind oder umgekehrt, bei einer linksgängigen Anordnung der Leitprofile die Stützstäbe rechtsgängig angeordnet sind. Dadurch wird besonders effektiv ein Verdrillen des Füllkörpers verhindert.

Vorzugsweise weisen eines der Leitprofile und einer der Stützstäbe einen gemeinsamen Kreuzungspunkt mit dem Außenstab auf. Als besonders vorteilhaft wird es angesehen, wenn jedes der Leitprofile und ein jeweiliger Stützstab einen gemeinsamen Kreuzungspunkt mit dem Außenstab aufweisen.

Gemäß einer weiteren bevorzugten Ausführungsform der Erfindung ist vorgesehen, dass die Leitprofile und/oder die Stützstäbe den Außenstab, insbesondere den zweiten Außenstab tangential kontaktieren. In diesem Zusammenhang wird es als besonders vorteilhaft angesehen, wenn dieser Außenstab durch Teilbereiche der Leitprofile und/oder durch Teilbereiche der Stützstäbe gebildet ist.

Vorzugsweise ist eine Oberfläche des Füllkörpers, insbesondere die Oberfläche des Leitprofils zumindest teilweise profiliert, insbesondere geriffelt gestaltet. Dadurch ist bei einfacher Gestaltung eine möglichst große Oberfläche des Füllkörpers gebildet.

Der Füllkörper besteht insbesondere aus Kunststoff. Es ist aber durchaus denkbar, den Füllkörper stattdessen aus Metall oder Keramik herzustellen.

Die bei dem beschriebenen Füllkörper an die Grundfläche, Mantelfläche und Deckfläche angrenzenden Komponenten des Füllkörpers, vorliegend die Außenstäbe und Stützstäbe bilden dessen Außenstruktur. Die bezüglich dieser Komponenten innenliegenden Komponenten, vorliegend die Leitprofile, bilden dessen Innenstruktur. Hierbei ist es durchaus möglich, dass sich innenliegende Komponenten, vorliegend die Leitprofile, bis in den Bereich der Außenstruktur erstrecken.

Weitere Merkmale der Erfindung sind in der nachfolgenden Beschreibung der Figuren sowie den Figuren selbst dargestellt, wobei bemerkt wird, dass alle Einzelmerkmale und alle Kombinationen von Einzelmerkmalen erfindungswesentlich sind.

In den Figuren ist die Erfindung anhand von drei bevorzugten Ausführungsformen dargestellt, ohne hierauf beschränkt zu sein.

Die Figuren zeigen:
- Fig. 1: ein erstes Ausführungsbeispiel des Füllkörpers in einer Ansicht gemäß dem Pfeil I in Fig. 2,
- Fig. 2: den Füllkörper in einer Ansicht gemäß dem Pfeil II in Fig. 1,
- Fig. 3: den Füllkörper in einer Ansicht gemäß dem Pfeil III in Fig. 1,
- Fig. 4: den Füllkörper gemäß Fig. 1 in einer perspektivischen Ansicht,
- Fig. 5: ein zweites Ausführungsbeispiel des Füllkörpers in einer Ansicht gemäß dem Pfeil V in Fig. 6,
- Fig. 6: den Füllkörper in einer Ansicht gemäß dem Pfeil VI in Fig. 5,
- Fig. 7: den Füllkörper in einer Ansicht gemäß dem Pfeil VII in Fig. 5,
- Fig. 8: den Füllkörper in einer Schnittansicht gemäß der Linie VIII in Fig. 5,
- Fig. 9: den Füllkörper in einer Schnittansicht gemäß der Linie IX in Fig. 6,
- Fig. 10: den Füllkörper gemäß Fig. 5 in einer perspektivischen Ansicht.
- Fig. 11: ein drittes Ausführungsbeispiel des Füllkörpers in einer Ansicht gemäß dem Pfeil XI in Fig. 12,
- Fig. 12: den Füllkörper in einer Ansicht gemäß dem Pfeil XII in Fig. 11,
- Fig. 13: den Füllkörper in einer Ansicht gemäß dem Pfeil XIII in Fig. 11,
- Fig. 14: den Füllkörper gemäß Fig. 11 in einer perspektivischen Ansicht,

Veranschaulicht ist in den Figuren ein Füllkörper 1, der insbesondere bei Stoff- und/oder Wärmeaustauschkolonnen, die von einer Gas- und/oder Flüssigkeitsströmung durchsetzt werden, im Zusammenhang mit einer Vielzahl weiterer derartiger Füllkörper 1 verwendet wird.

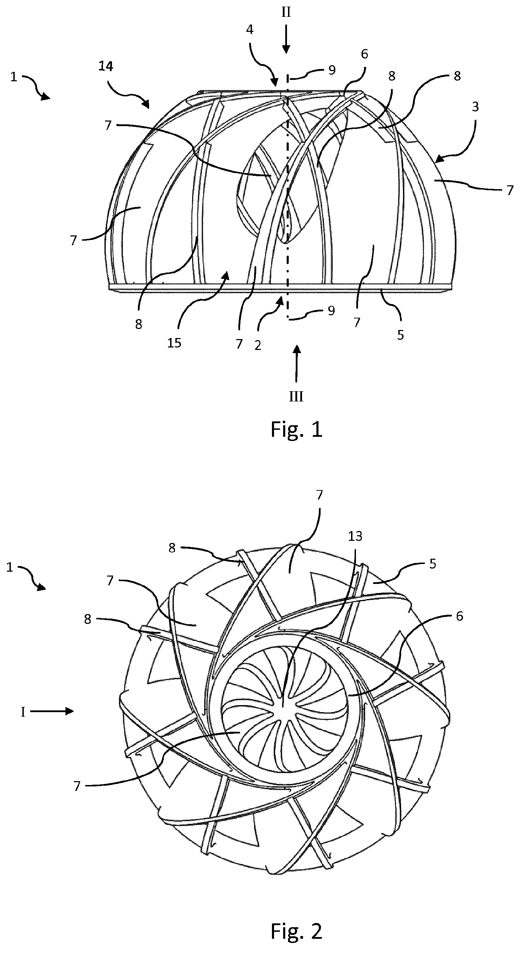

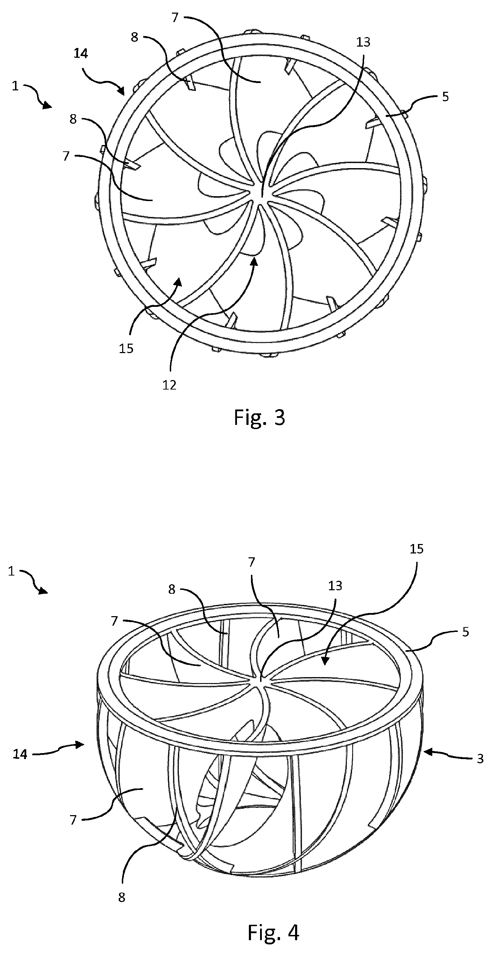

Der in den Fig. 1 bis 4 dargestellte Füllkörper 1 findet mit einer Vielzahl entsprechender Füllkörper 1 Verwendung in einer regellosen Schüttung. Der Füllkörper 1 weist eine kreisförmige ebene Grundfläche 2, eine gewölbte Mantelfläche 3 und eine der Grundfläche 2 gegenüberliegende und parallel zu der Grundfläche 2 ausgebildete, ebene, kreisförmige Deckfläche 4 auf.

Eine durch eine Gesamtheit von Grundfläche 2, Deckfläche 4 und Mantelfläche 3 gebildete Außenkontur des Füllkörpers 1 weist die Form eines axialsymmetrischen Teilbereichs einer Kugel auf, wobei weder die Grundfläche 2 noch die Deckfläche 4 eine Symmetrieebene der korrespondierenden Kugel bilden.

Eine Außenstruktur 14 des Füllkörpers 1 ist im Wesentlichen offen gestaltet und weist einen die Grundfläche 2 umlaufend umschließenden ersten Außenstab 5, einen die Deckfläche umlaufend umschließenden zweiten Außenstab 6 und mehrere entlang der Außenkontur der Mantelfläche 3 verlaufende Stützstäbe 8 auf.

Eine Innenstruktur 15 des Füllkörpers 1 ist durch acht Leitprofile 7 gebildet, wobei die Leitprofile 7 sternförmig angeordnet sind. Die Leitprofile 7 erstrecken sich von der Grundfläche 2 in Richtung der Deckfläche 4 und von der Mantelfläche nach innen in Richtung einer senkrecht zu der Deckfläche 4 und der Grundfläche 2 ausgebildeten Symmetrieachse 9, wobei die Leitprofile 7 eine sich von der Grundfläche 2 entlang der Symmetrieachse 9 erstreckende gemeinsame Schnittlinie 13 aufweisen. Die Leitprofile 7 erstrecken sich in kleinen äußeren Teilbereichen in die Außenstruktur 14.

Die Leitprofile 7 sind gewölbt gestaltet, wobei das jeweilige Leitprofil 7 geneigt zu der Grundfläche 2 ausgebildet ist, wobei eine Gesamtheit von den Leitprofilen 7 gebildet ist, die von der Grundfläche 2 in Richtung der Deckfläche 4 rechtsgängig ausgebildet ist.

Die Stützstäbe 8 bilden ebenfalls eine Gesamtheit, wobei diese Gesamtheit von der Grundfläche 2 in Richtung der Deckfläche 4 linksgängig und somit entgegengesetzt zu der Gesamtheit der Leitprofile 7 ausgebildet ist, wodurch ein Verdrillen bzw. Verformen des Füllkörpers verhindert ist.

Die Leitprofile 7 kontaktieren den zweiten Außenstab 6 tangential. Dabei ist dieser zweite Außenstab 6 durch Teilbereiche der Leitprofile 7 gebildet. Dadurch ist ein Verformen des Füllkörpers 1 entlang der Symmetrieachse 9 verhindert.

Es ist aber auch denkbar, dass ein Stützstab 8 zwei Leitprofile 7 verbindet, ohne jedoch den ersten Außenstab 5 oder den zweiten Außenstab 5 zu kontaktieren oder dass sich der Stützstab 8 vom ersten Außenstab 5 bis zu einem Leitprofil 7 erstreckt.

Die Leitprofile 7 weisen jeweils eine füllkörperinnenseitige Aussparung 12 auf, wobei durch diese Aussparungen 12 eine an die Deckfläche 4 angrenzende, rotationssymmetrische Ausnehmung der Innenstruktur gebildet ist.

Der Füllkörper 1 ist radiärsymmetrisch zu der Symmetrieachse 9 ausgebildet, wobei die Radiärsymmetrie achtzählig ist.

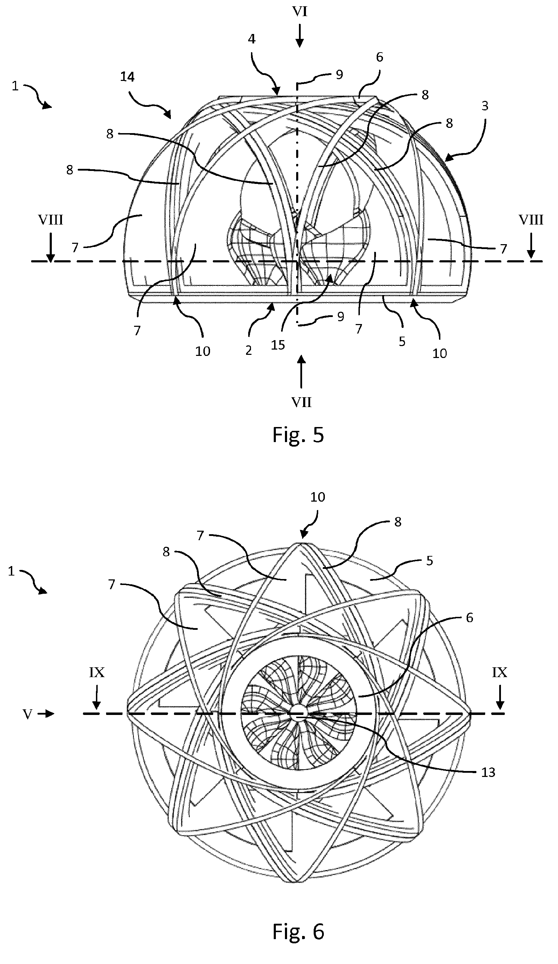

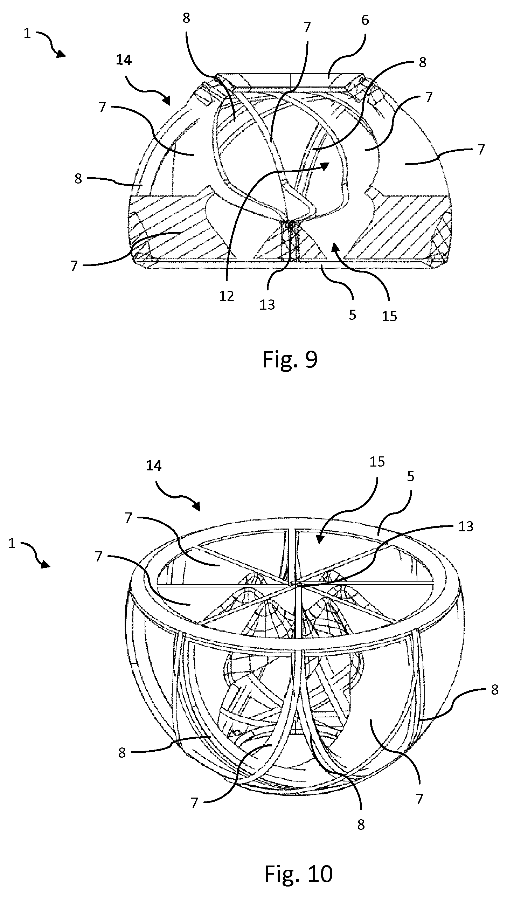

Die Fig. 5 bis 10 zeigen ein zweites Ausführungsbeispiel des Füllkörpers 1, wobei sich dieses von dem ersten Ausführungsbeispiel im Wesentlichen dadurch unterschiedet, dass jeweils ein Leitprofil 7 und ein Stützstab 8 einen gemeinsamen Kreuzungspunkt 10 mit dem ersten Außenstab 5 aufweisen.

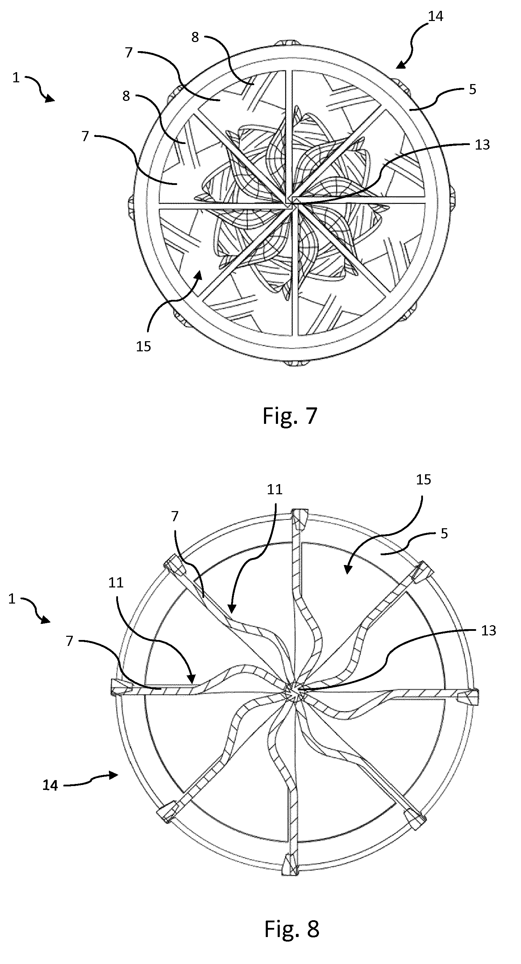

Wie insbesondere der in der Fig. 8 gezeigten Schnittansicht zu entnehmen ist, weisen die Leitprofile 7 des zweiten Ausführungsbeispiels zudem jeweils einen Krümmungswechsel 11 auf.

Die Leitprofile 7 und Stützstäbe 8 kontaktieren den zweiten Außenstab 6 tangential. Dabei ist dieser zweite Außenstab 6 durch Teilbereiche der Leitprofile 7 und durch Teilbereiche der Stützstäbe 8 gebildet.

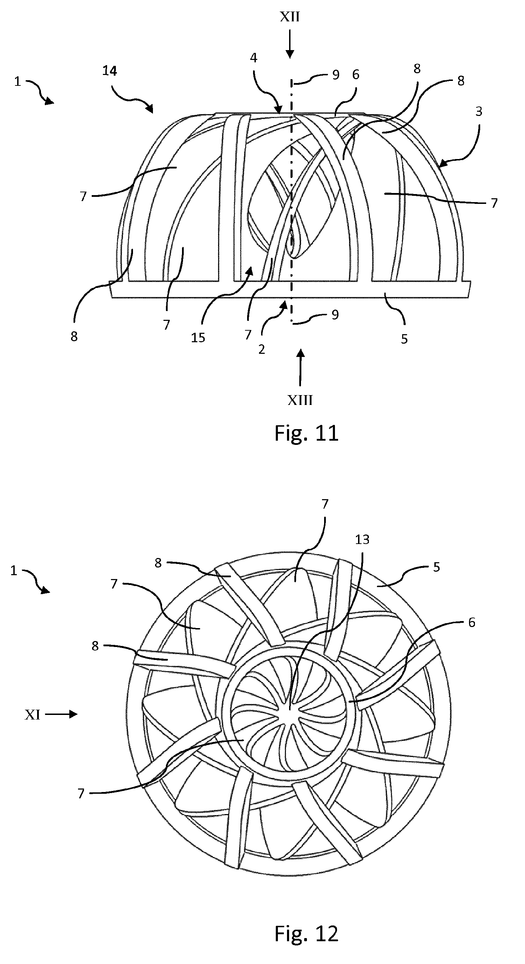

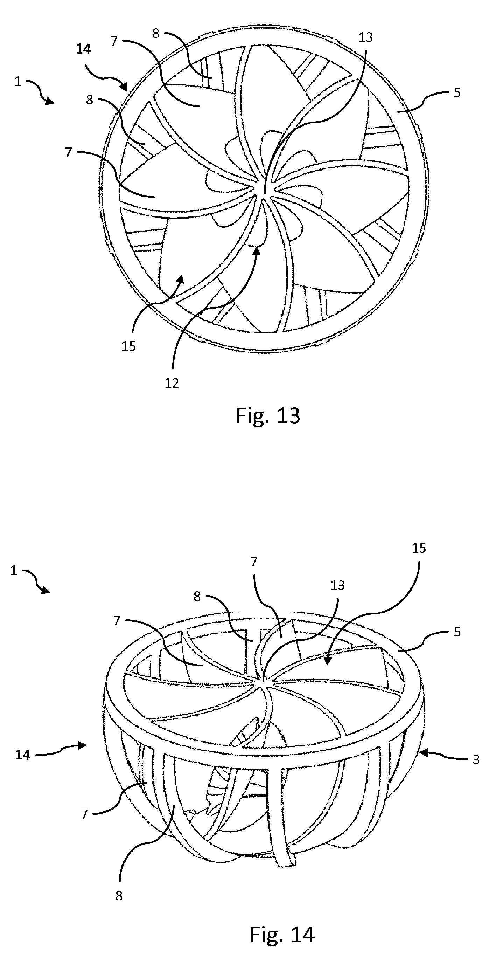

Die Fig. 11 bis 14 zeigen ein drittes Ausführungsbeispiel des Füllkörpers 1, wobei sich die Leitprofile 7 im Gegensatz zu den beiden vorigen Ausführungsbeispielen im Bereich der Mantelfläche 3 nicht bis in den Bereich der Außenstruktur 14 erstrecken.

Die Stützstäbe 8 der Außenstruktur 14 sind geneigt zu der Grundfläche 2 ausgebildet und verlaufen entlang der Mantelfläche 3, wobei die Stützstäbe 8 den ersten Außenstab 5 und den zweiten Außenstab 6 kontaktieren, wobei diese Kontaktierung nicht tangential ist.

Die Stützstäbe 8 kontaktieren neben dem ersten Außenring 5 und dem zweiten Außenring 6 zudem die Leitprofile 7, wodurch die Leitprofile 7 zusätzlich mittels der Stützstäbe 8 mit dem ersten Außenring 5 und mit dem zweiten Außenring 6 verbunden sind.

Für die Ausführungsbeispiele sind entsprechende Komponenten mit demselben Bezugszeichen bezeichnet.

### Bezugszeichenliste

- 1: Füllkörper
- 2: Grundfläche
- 3: Mantelfläche
- 4: Deckfläche
- 5: Erster Außenstab
- 6: Zweiter Außenstab
- 7: Leitprofil
- 8: Stützstab
- 9: Symmetrieachse
- 10: Kreuzungspunkt
- 11: Krümmungswechsel
- 12: Aussparung
- 13: Schnittlinie
- 14: Außenstruktur
- 15: Innenstruktur

## Patentansprüche

1. Füllkörper (1), insbesondere für Stoff- und / oder Wärmeaustauschkolonnen, die von einer Gas- und / oder Flüssigkeitsströmung durchsetzt werden, aufweisend eine Außenstruktur (14) und eine Innenstruktur (15), wobei der Füllkörper (1) eine Grundfläche (2), eine der Grundfläche (2) gegenüberliegende Deckfläche (4) und eine zwischen der Grundfläche (2) und der Deckfläche (4) angeordnete Mantelfläche (3) aufweist und die Innenstruktur (15) mehrere Leitprofile (7) aufweist, wobei sich die Leitprofile (7) von der Grundfläche (2) in Richtung der Deckfläche (4) erstrecken und wobei zumindest ein Teilbereich des Leitprofils (7) zu der Grundfläche (2) geneigt ausgebildet ist.

2. Füllkörper nach Anspruch 1, wobei die Leitprofile (7) kreuzförmig oder sternförmig angeordnet sind.

3. Füllkörper nach Anspruch 1 oder 2, wobei eine Gesamtheit von Leitprofilen (7) gebildet ist, wobei die Gesamtheit von Leitprofilen (7) von der Grundfläche (2) in Richtung der Deckfläche (3) rechtsgängig oder linksgängig ausgebildet ist.

4. Füllkörper (1) nach Ansprüche 1 bis 3, wobei ein Querschnitt parallel zu der Grundfläche (2) und/oder der Deckfläche (4) des Füllkörpers (1) gebildet ist, der einen Krümmungswechsel (11) des Leitprofils (7) aufweist.

5. Füllkörper nach einem der Ansprüche 1 bis 4, wobei zumindest eines der Leitprofile (7) füllkörperinnenseitig eine Aussparung (12) aufweist.

6. Füllkörper nach einem der Ansprüche 1 bis 5, wobei die Leitprofile (7) identisch ausgebildet sind.

7. Füllkörper nach einem der Ansprüche 1 bis 6, wobei eine Gesamtheit von Grundfläche (2), Deckfläche (4) und Mantelfläche (3) eine Außenkontur des Füllkörpers (1) bildet, wobei die Außenkontur die Form eines Zylinders oder die Form eines Kegelstumpfes, insbesondere mit einer kreisförmigen Grund- und Deckfläche oder eines Körpers analog dem Kegelstumpf, jedoch mit vieleckförmiger Grund- und Deckfläche, oder die Form eines achsialsymmetrischen Teilbereichs eines Ellipsoids, insbesondere die Form eines achsialsymmetrischen Teilbereichs einer Kugel, oder die Form eines achsialsymmetrischen Teilbereichs eines Hyperboloids aufweist.

8. Füllkörper nach einem der Ansprüche 1 bis 7, wobei die Grundfläche (2) und/oder die Deckfläche (4) kreisförmig oder in polygonaler Form ausgebildet ist, vorzugsweise die Grundfläche (2) und die Deckfläche (4) zueinander parallel ausgebildet sind.

9. Füllkörper nach einem der Ansprüche 1 bis 8, wobei der Füllkörper (1) und/oder die Außenstruktur (14) und/oder die Innenstruktur (15) und/oder die Gesamtheit der Leitprofile (7) radiärsymmetrisch zu einer Symmetrieachse (9) ausgebildet ist.

10. Füllkörper nach einem der Ansprüche 1 bis 9, wobei die Innenstruktur (15) eine an die Deckfläche (4) und/oder die Grundfläche (2) angrenzende, vorzugsweise rotationssymmetrische Ausnehmung aufweist.

11. Füllkörper nach einem der Ansprüche 1 bis 10, wobei die Außenstruktur zumindest einen Außenstab (5, 6) aufweist, wobei der Außenstab (5, 6) die Innenstruktur (15) umlaufend umschließt, insbesondere der Außenstab (5, 6) die Grundfläche (2) umlaufend umschließt oder der Außenstab (5, 6) die Deckfläche (4) umlaufend umschließt, vorzugsweise ein erster Außenstab (5) die Grundfläche (2) umlaufend umschließt und ein zweiter Außenstab (6) die Deckfläche (4) umlaufend umschließt.

12. Füllkörper nach einem der Ansprüche 1 bis 11, wobei die Außenstruktur (14) mehrere Stützstäbe (8) aufweist, insbesondere die Stützstäbe (8) entlang der Außenkontur der Mantelfläche (3) verlaufen.

13. Füllkörper nach Anspruch 12, wobei zumindest einer der Stützstäbe (8) zwei Leitprofile (7) und/oder zwei Außenstäbe (5, 6) und/oder den Außenstab (5, 6) mit einem der Leitprofile (7) verbindet.

14. Füllkörper nach Anspruch 12 oder 13, wobei eines der Leitprofile (7) und einer der Stützstäbe (8) einen gemeinsamen Kreuzungspunkt (10) mit dem Außenstab (5, 6) aufweist.

15. Füllkörper nach einem der Ansprüche 11 bis 14, wobei die Leitprofile (7) und/oder die Stützstäbe (8) den Außenstab (5, 6), insbesondere den zweiten Außenstab (6) tangential kontaktieren, vorzugsweise der Außenstab (5, 6) durch Teilbereiche der Leitprofile (7) und/oder durch Teilbereiche der Stützstäbe (8) gebildet ist.

16. Füllkörper nach einem der Ansprüche 1 bis 15, wobei eine Oberfläche des Füllkörpers (1), insbesondere die Oberfläche des Leitprofils (7), zumindest teilweise profiliert, insbesondere geriffelt gestaltet ist.

17. Füllkörper (1) nach einem der Ansprüche 1 bis 16, wobei der Füllkörper (1) aus Kunststoff, Keramik oder Metall besteht.

## Geänderte Patentansprüche

### Geänderte Patentansprüche gemäss Regel 137(2) EPÜ.

1. Füllkörper (1), insbesondere für Stoff- und / oder Wärmeaustauschkolonnen, die von einer Gas- und / oder Flüssigkeitsströmung durchsetzt werden, aufweisend eine Außenstruktur (14) und eine Innenstruktur (15), wobei der Füllkörper (1) eine Grundfläche (2), eine der Grundfläche (2) gegenüberliegende Deckfläche (4) und eine zwischen der Grundfläche (2) und der Deckfläche (4) angeordnete Mantelfläche (3) aufweist und die Innenstruktur (15) mehrere Leitprofile (7) aufweist, wobei sich die Leitprofile (7) von der Grundfläche (2) in Richtung der Deckfläche (4) erstrecken und wobei zumindest ein Teilbereich des Leitprofils (7) zu der Grundfläche (2) geneigt ausgebildet ist, wobei eine Gesamtheit von Leitprofilen (7) gebildet ist, wobei die Gesamtheit von Leitprofilen (7) von der Grundfläche (2) in Richtung der Deckfläche (4) rechtsgängig oder linksgängig ausgebildet ist, wobei die Außenstruktur (14) einen ersten Außenstab (5) aufweist, der die Grundfläche (2) umlaufend umschließt und einen zweiten Außenstab (6) aufweist, der die Deckfläche (4) umlaufend umschließt, **dadurch gekennzeichnet, dass** die Außenstruktur (14) mehrere Stützstäbe (8) aufweist, wobei die Stützstäbe (8) entlang der Außenkontur der Mantelfläche (3) verlaufen.

2. Füllkörper nach Anspruch 1, **dadurch gekennzeichnet, dass** die Leitprofile (7) kreuzförmig oder sternförmig angeordnet sind.

3. Füllkörper nach Anspruch 1 oder 2, **dadurch gekennzeichnet, dass** die Stützstäbe (8) bei einer rechtsgängigen Anordnung der Leitprofile (7) linksgängig angeordnet sind und bei einer linksgängigen Anordnung der Leitprofile (7) rechtsgängig angeordnet sind.

4. Füllkörper (1) nach Ansprüche 1 bis 3, **dadurch gekennzeichnet, dass** ein Querschnitt parallel zu der Grundfläche (2) und/oder der Deckfläche (4) des Füllkörpers (1) gebildet ist, der einen Krümmungswechsel (11) des Leitprofils (7) aufweist.

5. Füllkörper nach einem der Ansprüche 1 bis 4, **dadurch gekennzeichnet, dass** zumindest eines der Leitprofile (7) füllkörperinnenseitig eine Aussparung (12) aufweist.

6. Füllkörper nach einem der Ansprüche 1 bis 5, **dadurch gekennzeichnet, dass** die Leitprofile (7) identisch ausgebildet sind.

7. Füllkörper nach einem der Ansprüche 1 bis 6, **dadurch gekennzeichnet, dass** eine Gesamtheit von Grundfläche (2), Deckfläche (4) und Mantelfläche (3) eine Außenkontur des Füllkörpers (1) bildet, wobei die Außenkontur die Form eines Zylinders oder die Form eines Kegelstumpfes, insbesondere mit einer kreisförmigen Grund- und Deckfläche oder eines Körpers analog dem Kegelstumpf, jedoch mit vieleckförmiger Grund- und Deckfläche, oder die Form eines achsialsymmetrischen Teilbereichs eines Ellipsoids, insbesondere die Form eines achsialsymmetrischen Teilbereichs einer Kugel, oder die Form eines achsialsymmetrischen Teilbereichs eines Hyperboloids aufweist.

8. Füllkörper nach einem der Ansprüche 1 bis 7, **dadurch gekennzeichnet, dass** die Grundfläche (2) und/oder die Deckfläche (4) kreisförmig oder in polygonaler Form ausgebildet ist, vorzugsweise die Grundfläche (2) und die Deckfläche (4) zueinander parallel ausgebildet sind.

9. Füllkörper nach einem der Ansprüche 1 bis 8, **dadurch gekennzeichnet, dass** der Füllkörper (1) und/oder die Außenstruktur (14) und/oder die Innenstruktur (15) und/oder die Gesamtheit der Leitprofile (7) radiärsymmetrisch zu einer Symmetrieachse (9) ausgebildet ist.

10. Füllkörper nach einem der Ansprüche 1 bis 9, **dadurch gekennzeichnet, dass** die Innenstruktur (15) eine an die Deckfläche (4) und/oder die Grundfläche (2) angrenzende, vorzugsweise rotationssymmetrische Ausnehmung aufweist.

11. Füllkörper nach einem der Ansprüche 1 bis 10, **dadurch gekennzeichnet, dass** zumindest einer der Stützstäbe (8) zwei Leitprofile (7) und/oder zwei Außenstäbe (5, 6) und/oder den Außenstab (5, 6) mit einem der Leitprofile (7) verbindet.

12. Füllkörper nach einem der Ansprüche 1 bis 11, **dadurch gekennzeichnet, dass** eines der Leitprofile (7) und einer der Stützstäbe (8) einen gemeinsamen Kreuzungspunkt (10) mit dem Außenstab (5, 6) aufweist.

13. Füllkörper nach einem der Ansprüche 1 bis 12, **dadurch gekennzeichnet, dass** die Leitprofile (7) und/oder die Stützstäbe (8) den Außenstab (5, 6), insbesondere den zweiten Außenstab (6) tangential kontaktieren, vorzugsweise der Außenstab (5, 6) durch Teilbereiche der Leitprofile (7) und/oder durch Teilbereiche der Stützstäbe (8) gebildet ist.

14. Füllkörper nach einem der Ansprüche 1 bis 13, **dadurch gekennzeichnet, dass** eine Oberfläche des Füllkörpers (1), insbesondere die Oberfläche des Leitprofils (7), zumindest teilweise profiliert, insbesondere geriffelt gestaltet ist.

15. Füllkörper (1) nach einem der Ansprüche 1 bis 14, **dadurch gekennzeichnet, dass** der Füllkörper (1) aus Kunststoff, Keramik oder Metall besteht.
